# EUROPEAN PATENT SPECIFICATION

(11) **EP 4 120 661 B1**
(45) Date of publication and mention of the grant of the patent: **27.11.2024**
(21) Application number: 21305981.9
(22) Date of filing: 13.07.2021
(51) Int. Cl.: H04L 67/00, H04L 67/56, H04L 67/566, H04L 67/568

(54) **VIRTUAL EDGE DEVICE**
VIRTUELLE RANDVORRICHTUNG
DISPOSITIF DE BORD VIRTUEL

(43) Date of publication of application: 18.01.2023
(73) Proprietor: S.A. Vitec, 75008 Paris (FR)
(72) Inventor: Allan, Mike, 75008 PARIS (FR); Wilson, Callum, 75008 PARIS (FR); Albuquerque, Marco, 75008 PARIS (FR); Neville, Richard, 75008 PARIS (FR)
(74) Representative: Plasseraud IP

(56) References cited:
- US-A1- 2018 205 521
- US-A1- 2021 212 162
- US-B1- 7 634 577

## Description

### FIELD OF THE INVENTION

The disclosure belongs to the field of telecommunication. It generally relates to communication between on-premise devices and a cloud service.

In particular there are disclosed a communication device, a communication method using such device, a computer program for carrying out such method and a computer readable medium storing such program.

### BACKGROUND OF THE INVENTION

There are two main known ways for a device to connect to a cloud in view of exchanging information.

In a first approach, which is currently widely used for its simplicity, the device directly connects to the cloud, so that the cloud applications are given direct access to each device. In the residential market, this solution is used repeatedly by Amazon Alexa^{™}, Google Home^{™}, etc. to get status and allow control of these devices.

In this scenario the device has a preconfigured location, such as an IP address, to contact. To provision the device, its user is required to enter credentials, typically a username and a password, in the administrative interface of the device. Each device then connects to the cloud using a HTTPS based WebSocket to enable bidirectional communication to and from the device.

In a typical household there are probably a handful of devices utilizing this model, and sending and receiving small amounts of information.

Scaling this up to the corporate or hospitality environment, there is a need to manage and transfer data simultaneously to hundreds if not thousands of devices per geographic site. The model starts to fall down on three fronts: security, bandwidth and convenience.

The security risk is increased as the number of pathways into the network runs into the thousands. This provides a larger attack surface for any would be cyber attackers. Also, in the event of a breach, its containment is much harder as so many devices are connected externally. Bandwidth becomes strained if each device connects to the internet when for example frequent download of large digital signage or firmware updates. Each device would need to draw down its own copy of the files increasing the load of the external link. Convenience is more of a concern in the controlled environment of a corporate organization, each device would require whitelisting through firewalls to access the internet. This is seen as a major drawback in installing and maintaining a system in corporate environment.

In a second approach, a dedicated piece of hardware called an edge device or gateway device bridges between a LAN and the internet. An edge device is positioned at the extremities of the LAN with a connection to both networks. All traffic from the on-premise devices - located within the LAN - to the cloud go through this device. Security, bandwidth and convenience are improved. Indeed, the edge device is the only device to be directly connected to the internet, reducing the attack surface. Bandwidth can be contained using the edge device to download once and fan out. Further, the edge device is the only device required to be whitelisted. However, the second approach faces a major drawback in that new or additional hardware is required to allow connecting on-premise devices to the cloud.

US 7 634 577 B1 relates to the interworking of computer networks. Specifically, the invention relates to a proxy that groups Media Gateways.

US 2018/205521 A1 relates to virtual gateways that use personal communication devices to communicate with connected devices.

US 2021/212162 A1 relates to a network system that processes data generated by a data generation device, a communication control device, and a communication control method.

### SUMMARY OF THE INVENTION

The invention is defined by the appended independent claims. Additional features and advantages of the concepts herein disclosed are set forth in the description which follows.

The present disclosure aims at improving the situation. To this end, the present disclosure describes a communication device in a communication system within a network, the communication system further comprising a distant server, a local host module and a plurality of client devices,
the communication device comprising a virtual edge device configured to:
obtain, from the distant server, a message comprising a plurality of commands,
demultiplex the message into a plurality of demultiplexed commands, and
instruct the local host module to dispatch each demultiplexed command to a corresponding client device, characterized in that the message further comprises additional instructions enabling a given client device to apply a given command of the plurality of commands, the virtual edge device is configured to bundle the additional instructions with the corresponding demultiplexed command and to instruct the local host module to transmit the resulting bundle to the given client device.

Definitions of some of the expressions above are now provided.

A client device is understood to be an electronic device, such as a television, a smart speaker, a smartphone, a smart watch , a set-top box, a laptop, an audiovisual platform, etc. A client device is, at least, able to receive and apply commands. Optionally, the client device may further be able to receive an additional payload, and may have computational resources enabling processing such commands and/or such additional payload.

A command is an instruction issued by a digital service and targeted to such a client device. Examples of commands include entering or leaving power saving mode, triggering an animation routine, or playing a specific audio or video content.

The message obtained from the distant server comprises at least a plurality of such commands and may further comprise additional payload data.

For example, the message may comprise, on top of a given command, additional instructions enabling a given client device to apply the given command. In such a case, it is possible for the virtual edge device to bundle these additional instructions with the corresponding demultiplexed command and to instruct the local host module to transmit the resulting bundle to the given client device.

It is understood that all the client devices are within the same local network as the local host module. Therefore, it is assumed that the local host module is a network component able to maintain a local communication with each of said client devices. The local host module may be either software or hardware based.

A distant server, or remote server, is formed of one or more processing circuits running a digital service that is accessible to the client devices. In the case of cloud computing, the digital service is run by a plurality of processing circuits, or a plurality of computers, and is accessible through a wide area network.

The virtual edge device is a software module that is installed and running on a local host device within the communication system. In other words, the communication device is not exclusively, or even primarily, a physical edge device. Rather, the virtual edge device takes advantage of computing resources and of network resources that have originally been provided for another purpose. No new or additional hardware is thus required to allow establishing a communication between client devices and the distant server.

Due to the virtual edge device, the commands issued by the distant server are received as a single message, then dispatched locally.

The virtual edge device being the sole access point to the client devices, security risks are minimized. In the event of a security breach, containment is also quick and easy, for example by simply disconnecting or powering off the communication device running the virtual edge device.

Another advantage resulting of this single access point is that the communication device is the sole device requiring whitelisting through firewalls.

Another advantage over the state of the art is an improvement in terms of bandwidth. Indeed, in a simple scenario, the message may for example comprise a single command intended to a plurality of client devices. Obtaining this message at the virtual edge device and dispatching the single command locally requires much less bandwidth than if each client device separately downloaded the same command from the distant server through a respective dedicated channel.

In an example, the virtual edge device is further configured to:
receive, from the local host module, a plurality of notifications, each notification originating from a corresponding client device,
aggregate the notifications into an aggregated notification message, and
send the aggregated notification message to the distant server.

Notifications can be aggregated in response to the distance server. The notifications can be of the same or different types.

An example of type of notification is status updates, that is to say live updates of the status of the emitting client device. Status updates are of an asynchronous nature and indicate an occurrence of an unpredicted, or random, event relating to the emitting client device.

Another example of a type of notification is announcements, such as ping calls, in view of obtaining a response. Some types of announcements are part of a provisioning process aiming at establishing a communication link between a client device and another entity through a communication network. Various known techniques, for example handshake-based, may be applied for the purpose of establishing such communication link. Announcements sent by a client device to the local host allow the local host to reply to the client device by requesting for example credentials, then allowing access to the LAN.

According to the SSDP protocol for example, a client device to be provisioned may periodically broadcast announcements until receiving a reply. Such announcements may enable, for instance, the virtual edge device to perform a discovery of the client devices. The virtual edge device may instruct the local host to send setup instructions as a reply to such an announcement, in view of provisioning the client device..

In an example, the virtual edge device is further configured to:
receive, from the local host module, a plurality of notifications over time, each notification originating from a corresponding client device, and
for a plurality of subsequent time intervals, aggregate the notifications received during a time interval into a corresponding aggregated notification message associated to said time interval, and
send the aggregated notification message associated to said time interval to the distant server upon ending said time interval.

The adequate timeframe may be set depending on the nature, or type, of the notifications. The length of a time interval for receiving and aggregating announcements may be any length, for example 0.5s, so as to allow a quick provisioning of a client device. The length of a time interval for receiving and aggregating status updates may have less stringent requirements and may for example range between 30 seconds and 10 minutes. The time intervals for a given purpose may form a periodic sequence.

In an example, communication between the virtual edge device and the distant server is performed through a wide area network, using a single WebSocket. By only using a single channel for communicating with the remote server, the security of the communications through the virtual edge device is further enhanced.

In an example, communication between the virtual edge device and the distant server uses token-based authentication. For instance, the connection may be protected by using HTTPS on the WebSocket connection, this may be further enhanced by using a token-based authentication. For instance, a generated and pre-shared secret, can be used to generate a token which can be used to authenticate the virtual edge device.

In an example, the communication device further comprises the local host module. In other words, the virtual edge device may be installed and running on a standard communication device further used as local host.

The virtual edge device may operate by taking advantage of the APIs already used by the local host module. Indeed, in an example, communication between the virtual edge device and the local host module is performed through a host application programming interface.

In an example, communication at the virtual edge device uses a stateless protocol. This allows the virtual edge device not to retain any information about the current or previous state of the client devices, nor about the commands or the responses to such commands.

In another aspect, it is proposed a communication method implemented in a communication system within a network, the communication system comprising a communication device, a distant server, a local host module and a plurality of client devices, the communication device comprising a virtual edge device, the method comprising, at the virtual edge device:
obtaining, from the distant server, a message comprising a plurality of commands, demultiplexing the message into a plurality of demultiplexed commands, and instructing the local host module to dispatch each demultiplexed command to a corresponding client device, characterized in that the message further comprises additional instructions enabling a given client device to apply a given command of the plurality of commands, the virtual edge device is configured to bundle the additional instructions with the corresponding demultiplexed command and to instruct the local host module to transmit the resulting bundle to the given client device.

In another aspect, it is proposed a computer program comprising instructions which, when the program is executed by a processor, cause the processor to carry out the above method.

In another aspect, it is proposed a computer readable medium, such as a computer readable non-transitory storage medium or a computer readable transitory signal, comprising instructions which, when executed by a processor, cause the processor to carry out the above method.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
Figures 1 to 3 illustrate a communication system comprising a communication device according to an exemplary embodiment.
Figure 4 depicts a workflow associated to issuing and routing commands to on-premise devices in such a communication system.
Figure 5 depicts a workflow associated to reporting status updates from on-premise devices in such a communication system.
Figure 6 depicts a workflow associated to initiating the provisioning of on-premise devices in such a communication system.

### DETAILED DESCRIPTION OF THE INVENTION

The present invention aims at facilitating security, minimizing bandwidth and improving convenience associated to the use of a large number of connected devices within a local network, while obviating the need of dedicated hardware components for connecting said devices to one or more distant servers.

The present invention may find uses in various environments, such as corporate, hospitals, universities, hotels, airports, amusement parks, and the like.

To do so, a virtual edge device (VED) (11) is proposed as a software application that can be installed onto an existing running device (1) that acts as the conduit to the distant server for all client devices (3). This is similar in operation to an edge device but that it is resident on one of the existing devices.

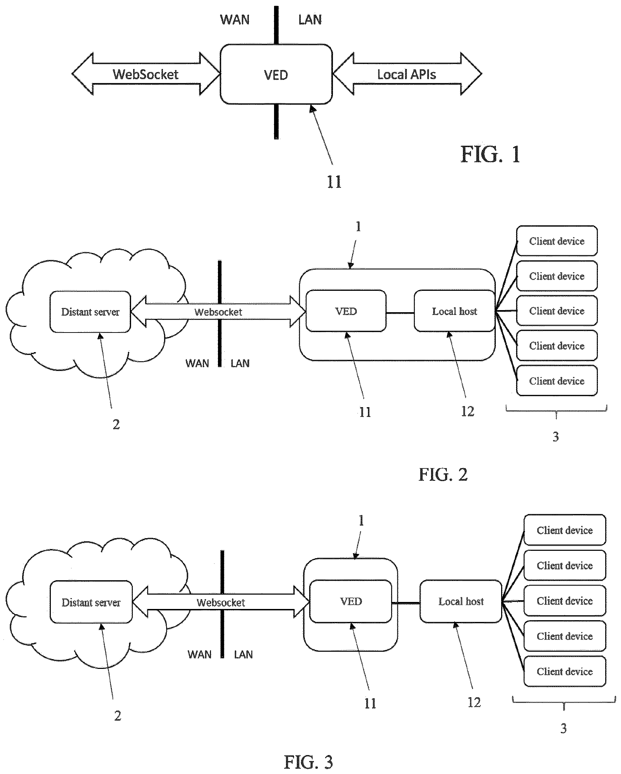

It is hereafter described an exemplary embodiment of the invention in connection with Figures 1 to 3, which depict the main architecture of a VED (11) within a communication system.

The VED (11) is the interface between:
a plurality of connected devices (3) within the same local area network (LAN), and
a distant server (2), or a group of distant servers running one or more cloud services, that is accessible through a wide area network (WAN).

There is a bidirectional connection between the VED (11) and the distant server (2) that can easily navigate a firewall. For example, a WebSocket connection can be used for this communication over port 443. WebSocket is advantageous for real-time data transfer from and to the distant server (2) and, when using TCP port number 443 or 80, is beneficial for environments that block non-web Internet connections. The VED (11) may have a permanent bidirectional connection to the cloud. The bidirectional connection may be secured using for instance the HTTPS protocol.

Communication between the VED (11) and the connected devices (3) may be performed using for example local APIs, in other words using one or more pre-existing communication links between the connected devices (3) and the device (1) hosting the VED (11).

Since the connected devices (3) are within the same local area network (LAN), the communication system comprises one or more local host modules (12) at the edge of the LAN. As depicted on Figure 2, the VED (11) and the local host module (12) may correspond to the same communication device (1). Alternately, as depicted on Figure 3, the VED (11) and the local host module (12) may correspond to different communication devices on the same network.

As described later in this document, in both cases, the VED (11) acts as a master controller within the LAN in that it instructs the local host module (12) to dispatch commands to the connected devices (3).

When the VED (11) and the local host module (12) correspond to the same communication device (1), the VED (11) has a parasitic relationship with the local host module (12), utilizing both an additional network port on the host for traffic to and from the internet and exercising the APIs and resources of the host to act on the devices in the LAN. The VED (11) uses the host to store and gain information and control.

In an example, there is a single VED (11) per geographic location that acts as the single point of contact from the cloud system to a corresponding LAN.

In an example, the VED (11) uses the local resources of the local host module (12) to offer functionality to the services residing in the cloud. A single secure WebSocket is used for communication between the VED (11) and one or more cloud services provided by one or more distant servers (2). A pre shared secret and generated token is used to authenticate the VED (11) which is seen by the cloud services as a client. Such token may be used in all communications using the WebSocket and can be rescinded at any time to prevent further communication if required.

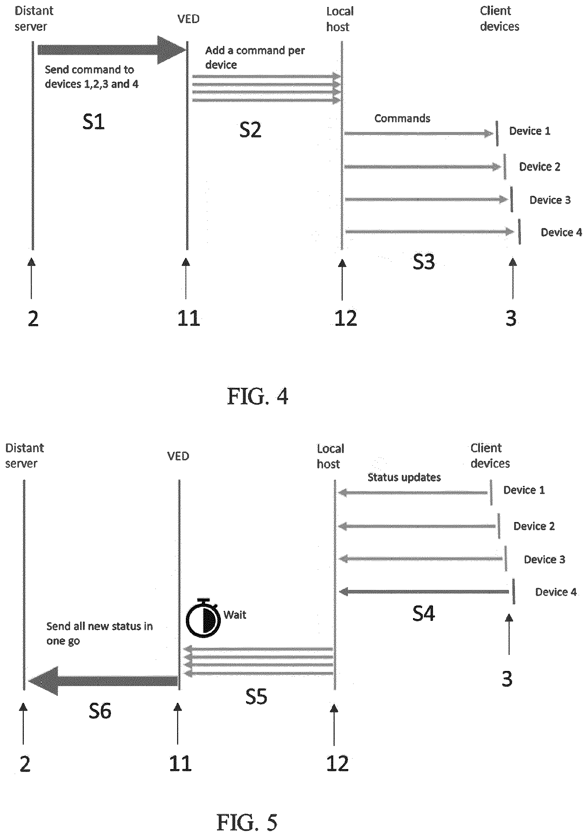

It is hereafter described, in connection with Figures 4 to 6, a series of exemplary workflows that may be performed by the VED (11) according to embodiments of the invention.

In an embodiment illustrated in Figure 4, the VED (11) may act as a fan out taking single instructions from the cloud and executing them on multiple client devices (3) using local APIs and the capabilities of the device (1) hosting the local host module (12).

Specifically, a cloud service run by one or more distant servers (2) sends (S 1) multiple commands in a single message to the VED (11). The message sent from the distant server (2) could comprise one command to be sent to multiple devices, multiple commands to be sent to multiple devices or multiple commands to be sent a single device.

The VED (11) acts as command demultiplexer, taking a single message in from the distant server (2) and demultiplexing this to send (S3) each demultiplexed commands to the corresponding, targeted, client device (3) using the local APIs.

In this regard, the VED (11) acts as a gateway between the LAN and the WAN, at least as far as commands issued by the cloud service are concerned.

For example, it may be desired to push an update to a software installed on a group of connected devices (3) within the LAN. To do so, the distant server (2) may issue a bundle of commands in a single message readable by the VED (11). The message thus comprises, for each connected device (3) of the group, a command for initiating such update process. Upon receiving (S1) such command message, the VED (11) unbundles the commands and adds (S2) them to the local host module (12) using a local API. The host module (12) acts as normal on the local devices (3), respectively sending (S3) each such command to a corresponding device (3) of the group, as directed by the VED (11). As a result, each device (3) of the group may trigger the update process as expected.

Considering commands related to distributing digital signage content, video content, or other media tracks, another capability of the VED (11) is to perform caching of such content using the capabilities of the host module (12).

More generally, the VED (11) may be used by the cloud service as a control proxy having a parasitic use of any other subroutine already running on the communication device (1) it is hosted by.

The use of a VED (11) as a command demultiplexer and control proxy provides several advantages over known communication methods.

Contrary to known solutions based on direct communication between each connected device (3) and a distant server (2), the VED (11) allows for improved security, bandwidth and convenience, as already explained.

Contrary to known solutions based on a physical edge device as a specific additional hardware, the VED (11) is purely an independently installable software component running on an existing hardware, and as such the VED (11) integrates smoothly in an existing local area network. Once the devices (3) are connected to the local host module (12), these devices (3) are fully able to receive any command sent to them by the local host module. No additional configuration of the connected devices (3) is required. Indeed, the on-premise devices (3) only communicate with the local host module (12) using local APIs. These devices (3) are completely unaware of the VED (11) or of the distant server (2).

Likewise, when notifications such as status updates are emitted (S4) by the on-premise devices (3) and received by the local host module (12), the VED (11) aggregates (S5) the notifications into a single notification message to send (S6) to the cloud service. Again, the on-premise devices (3) are unaware of the VED (11) or of the cloud service.

Since status updates from the connected devices (3) have an asynchronous nature and are received randomly over time, a predetermined criterion is needed to determine which of the status updates to aggregate into a given message. Possible criteria may relate to time, to a number, a type, a size of the notifications, etc.

In an example, two criteria are taken into account.

A first criterion relates to the type of the notifications received from the connected devices (3).

Two types of notifications are considered here.

A first type of notification is status updates, which indicate a change of status of a connected device (3). Such change of status may be initiated by a user of the device through a human-machine interface. For example, a user may use a remote control to request switching channels of a television. For example, a user may interact with a touch screen to request access to a media content. Such change of status may indicate detection, by a sensor of a connected device (3), of a lack of a main power source, leading to an automatic switch of the connected device (3) from a normal power mode to a low power mode. Many more examples of status updates may be cited, considering the broad range of natures of connected devices nowadays. For example, a smart security camera may issue a status update upon detecting a movement in a currently recorded flow. For example, in a museum, where temperature and moisture in every room are constantly monitored, it is possible to configure the VED (11) to bundle altogether any status updates originating from multiple temperature sensors and from multiple humidity sensors.

A second type of notification is announcements, which are broadcast by a connected device (3) in view of receiving a response. The expected response may be, for example, specific instructions from a given entity, such as the distant server (2), defining a communication protocol suitable for further communications with said entity.

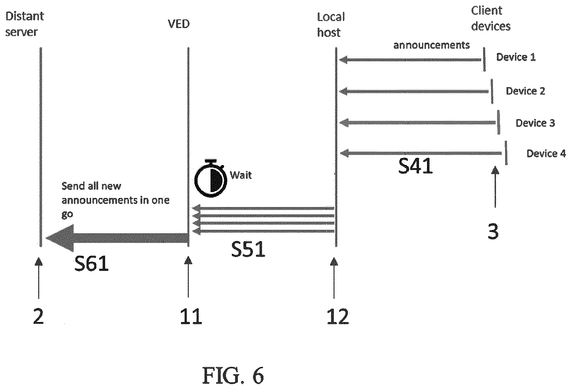

As depicted in Fig. 6, announcements may be issued (S41) repeatedly by a plurality of connected devices (3) based on a clock specific to each said device. These announcements are received, like every other type of data circulating within the LAN, by the local host module (12) and forwarded to the VED (11). The VED (11) may be configured to accumulate and bundle a plurality of such announcements into a single notification message. By doing so, the VED (11) does not interfere with the normal functions of the connected devices (3) and, therefore, acts as a transparent discovery proxy.

It is possible to configure the VED (11) to separately bundle, on the one hand, the received status updates and, on the other hand, the received announcements.

A second criterion relates to time segmentation. A predetermined time requirement policy may be predefined and associated to a given type of notifications originating from the connected devices (3). Alternatively, default time requirements may be predefined for all types of notifications. The time requirements may for example be defined in terms of a maximum allowable latency separating issuance of a notification by a connected device (3) and transmission of said notification, in a bundled form, to the distant server (2).

By combining both criteria, it is possible to configure the VED (11) to instruct the local host module (12):
to send, every second, or every half a second for example, an aggregate notification message of a first type, formed of all notifications of a first type received from the connected devices (3) during the previous second or the previous half a second, and
to send, for example every two seconds or every five seconds, an aggregate notification message of a second type, formed of all notifications of a second type received from the connected devices (3) during the previous two seconds or the previous five seconds.

It should further be mentioned that the VED (11) may be stateless regarding all types of communications that it controls.

Indeed, the VED (11) does not need to retain any kind of information related to the status of the devices (2) in order to perform any of the following:
bundle notifications such as status updates or announcements,
demultiplex commands,
instruct the local host module (12) to dispatch demultiplexed commands to devices (3),
instruct the local host module (12) to send messages to a distant server (2).

## Claims

1. A communication device (1) in a communication system within a network, the communication system further comprising a distant server (2), a local host module (12) and a plurality of client devices (3),
the communication device comprising a virtual edge device (11) configured to:
obtain, from the distant server (2), a message comprising a plurality of commands,
demultiplex the message into a plurality of demultiplexed commands, and
instruct the local host module (12) to dispatch each demultiplexed command to a corresponding client device (3),
**characterized in that**
the message further comprises additional instructions enabling a given client device (3) to apply a given command of the plurality of commands,
the virtual edge device (11) is configured to bundle the additional instructions with the corresponding demultiplexed command and to instruct the local host module (12) to transmit the resulting bundle to the given client device (3).

2. The communication device (1) of claim 1, wherein the virtual edge device (11) is further configured to:
receive, from the local host module (12), a plurality of notifications, each notification originating from a corresponding client device (3),
aggregate the notifications into an aggregated notification message, and
send the aggregated notification message to the distant server (2).

3. The communication device (1) of claim 1, wherein the virtual edge device (11) is further configured to:
receive, from the local host module (12), a plurality of notifications over time, each notification originating from a corresponding client device (3), and
for a plurality of subsequent time intervals, aggregate the notifications received during a time interval into a corresponding aggregated notification message associated to said time interval, and
send the aggregated notification message associated to said time interval to the distant server (2) upon ending said time interval.

4. The communication device of any of the preceding claims, further comprising the local host module (12).

5. The communication device of any of the preceding claims, wherein communication between the virtual edge device (11) and the distant server (2) is performed through a wide area network, using a single WebSocket.

6. The communication device of the preceding claim, wherein communication between the virtual edge device (11) and the distant server (2) uses token-based authentication.

7. The communication device of any of the preceding claims, wherein communication between the virtual edge device (11) and the local host module (12) is performed through a host application programming interface.

8. The communication device of any of the preceding claims, wherein communication at the virtual edge device (11) uses a stateless protocol.

9. A communication method implemented in a communication system within a network, the communication system comprising a communication device (1), a distant server (2), a local host module (12) and a plurality of client devices (3), the communication device comprising a virtual edge device (11), the method comprising, at the virtual edge device (11):
obtaining, from the distant server (2), a message comprising a plurality of commands, demultiplexing the message into a plurality of demultiplexed commands, and
instructing the local host module (12) to dispatch each demultiplexed command to a corresponding client device (3)
**characterized in that**
the message further comprises additional instructions enabling a given client device (3) to apply a given command of the plurality of commands,
the method comprising, at the virtual edge device (11), bundling the additional instructions with the corresponding demultiplexed command and instructing the local host module (12) to transmit the resulting bundle to the given client device (3).

10. A computer program comprising instructions which, when the program is executed by a processor, cause the processor to carry out the method of claim 9.

11. A computer readable medium comprising instructions which, when executed by a processor, cause the processor to carry out the method of claim 9.

## Patentansprüche

1. Kommunikationsvorrichtung (1) in einem Kommunikationssystem innerhalb eines Netzwerks, wobei das Kommunikationssystem ferner einen entfernten Server (2), ein lokales Host-Modul (12) und eine Mehrzahl von Client-Vorrichtungen (3) umfasst, wobei die Kommunikationsvorrichtung eine virtuelle Edge-Vorrichtung (11) umfasst, welche dazu eingerichtet ist:
eine Nachricht von dem entfernten Server (2) zu erhalten, welche eine Mehrzahl von Befehlen umfasst, die Nachricht in eine Mehrzahl von demultiplexten Befehlen zu demultiplexen, und das lokale Host-Modul (12) anzuweisen, jeden der demultiplexten Befehle zu einer entsprechenden Client-Vorrichtung (3) zu befördern,
**dadurch gekennzeichnet, dass**
die Nachricht ferner zusätzliche Anweisungen umfasst, welche es einer vorgegebene Client-Vorrichtung (3) ermöglichen, einen vorgegebenen Befehl der Mehrzahl von Befehlen anzuwenden,
die virtuelle Edge-Vorrichtung (11) dazu eingerichtet ist, die zusätzlichen Anweisungen mit dem entsprechenden demultiplexten Befehl zu bündeln und das lokale Host-Modul (12) anzuweisen, das resultierende Bündel an die vorgegebene Client-Vorrichtung (3) zu übertragen.

2. Kommunikationsvorrichtung (1) nach Anspruch 1, wobei die virtuelle Edge-Vorrichtung (11) ferner dazu eingerichtet ist, eine Mehrzahl von Benachrichtigungen von dem lokalen Host-Modul (12) zu empfangen, wobei jede Benachrichtigung einer entsprechenden Client-Vorrichtung (3) entstammt, die Benachrichtigungen in eine aggregierte Benachrichtigungsnachricht zu aggregieren, und die aggregierte Benachrichtigungsnachricht zu dem entfernten Server (2) zu senden.

3. Kommunikationsvorrichtung (1) nach Anspruch 1, wobei die virtuelle Edge-Vorrichtung (11) ferner dazu eingerichtet ist, eine Mehrzahl von Benachrichtigungen von dem lokalen Host-Modul (12) über eine Zeit zu empfangen, wobei jede Benachrichtigung einer entsprechenden Client-Vorrichtung (3) entstammt, und, für eine Mehrzahl von nachfolgenden Zeitintervallen, die Benachrichtigungen, welche während eines Zeitintervalls empfangen sind, in eine entsprechende aggregierte Benachrichtigungsnachricht zu aggregieren, welche mit dem Zeitintervall assoziiert ist, und die aggregierte Benachrichtigungsnachricht, welche mit dem Zeitintervall assoziiert ist, zu dem entfernten Server (2) auf ein Beenden des Zeitintervalls hin zu senden.

4. Kommunikationsvorrichtung nach einem der vorhergehenden Ansprüche, welche ferner das lokale Host-Modul (12) umfasst.

5. Kommunikationsvorrichtung nach einem der vorhergehenden Ansprüche, wobei eine Kommunikation zwischen der virtuellen Edge-Vorrichtung (11) und dem entfernten Server (2) durch ein Weitverkehrsnetzwerk unter Verwendung eines einzelnen WebSockets durchgeführt wird.

6. Kommunikationsvorrichtung nach dem vorhergehenden Anspruch, wobei eine Kommunikation zwischen der virtuellen Edge-Vorrichtung (11) und dem entfernten Server (2) eine Token-basierte Authentifikation verwendet.

7. Kommunikationsvorrichtung nach einem der vorhergehenden Ansprüche, wobei eine Kommunikation zwischen der virtuellen Edge-Vorrichtung (11) und dem lokale Host-Modul (12) durch ein Host-Anwendung-Programmierinterface durchgeführt ist.

8. Kommunikationsvorrichtung nach einem der vorhergehenden Ansprüche, wobei eine Kommunikation an der virtuellen Edge-Vorrichtung (11) ein zustandsloses Protokoll verwendet.

9. Kommunikationsverfahren, welches in einem Kommunikationssystem innerhalb eines Netzwerks implementiert wird, wobei das Kommunikationssystem eine Kommunikationsvorrichtung (1), einen entfernten Server (2), ein lokales Host-Modul (12) und eine Mehrzahl von Client-Vorrichtungen (3) umfasst, wobei die Kommunikationsvorrichtung eine virtuelle Edge-Vorrichtung (11) umfasst, wobei das Verfahren an der virtuellen Edge-Vorrichtung (11) umfasst:
Erhalten einer Nachricht von dem entfernten Server (2), welche eine Mehrzahl von Befehlen umfasst, Demultiplexen der Nachricht in eine Mehrzahl von demultiplexten Befehlen, und Anweisen des lokalen Host-Moduls (12), jeden demultiplexten Befehl zu einer entsprechenden Client-Vorrichtung (3) zu befördern,
**dadurch gekennzeichnet, dass**
die Nachricht ferner zusätzliche Anweisungen umfasst, welche es einer vorgegebene Client-Vorrichtung (3) ermöglichen, einen vorgegebenen Befehl der Mehrzahl von Befehlen anzuwenden,
wobei das Verfahren an der virtuellen Edge-Vorrichtung (11) ein Bündeln der zusätzlichen Anweisungen mit dem entsprechenden demultiplexten Befehl und ein Anweisen des lokale Host-Moduls (12) umfasst, das resultierende Bündel an die vorgegebene Client-Vorrichtung (3) zu übertragen.

10. Computerprogramm, welches Anweisungen umfasst, welche, wenn das Programm durch einen Prozessor ausgeführt wird, den Prozessor veranlassen, das Verfahren nach Anspruch 9 auszuführen.

11. Computerlesbares Medium, welches Anweisungen umfasst, welche, wenn das Programm durch einen Prozessor ausgeführt wird, den Prozessor veranlassen, das Verfahren nach Anspruch 9 auszuführen.

## Revendications

1. Dispositif de communication (1) dans un système de communication au sein d'un réseau, le système de communication comprenant en outre un serveur distant (2), un module hôte local (12) et une pluralité de dispositifs clients (3),
le dispositif de communication comprenant un dispositif de périphérie virtuel (11) configuré pour :
obtenir, en provenance du serveur distant (2), un message comprenant une pluralité de commandes,
démultiplexer le message en une pluralité de commandes démultiplexées, et
ordonner au module hôte local (12) d'envoyer chaque commande démultiplexée à un dispositif client correspondant (3),
**caractérisé en ce que**
le message comprend en outre des instructions supplémentaires permettant à un dispositif client donné (3) d'appliquer une commande donnée de la pluralité de commandes,
le dispositif de périphérie virtuel (11) est configuré pour regrouper les instructions supplémentaires avec la commande démultiplexée correspondante et pour ordonner au module hôte local (12) de transmettre le groupe résultant au dispositif client donné (3).

2. Dispositif de communication (1) selon la revendication 1, dans lequel le dispositif de périphérie virtuel (11) est en outre configuré pour :
recevoir, en provenance du module hôte local (12), une pluralité de notifications, chaque notification provenant d'un dispositif client correspondant (3),
agréger les notifications en un message de notifications agrégées, et
envoyer le message de notifications agrégées au serveur distant (2).

3. Dispositif de communication (1) selon la revendication 1, dans lequel le dispositif de périphérie virtuel (11) est en outre configuré pour :
recevoir, en provenance du module hôte local (12), une pluralité de notifications au fil du temps, chaque notification provenant d'un dispositif client correspondant (3), et pour une pluralité d'intervalles de temps ultérieurs, agréger les notifications reçues pendant un intervalle de temps en un message de notifications agrégées correspondant associé audit intervalle de temps, et
envoyer le message de notifications agrégées associé audit intervalle de temps au serveur distant (2) à la fin dudit intervalle de temps.

4. Dispositif de communication selon l'une quelconque des revendications précédentes, comprenant en outre le module hôte local (12).

5. Dispositif de communication selon l'une quelconque des revendications précédentes, dans lequel la communication entre le dispositif de périphérie virtuel (11) et le serveur distant (2) s'effectue par l'intermédiaire d'un réseau étendu, au moyen d'un WebSocket unique.

6. Dispositif de communication selon la revendication précédente, dans lequel la communication entre le dispositif de périphérie virtuel (11) et le serveur distant (2) utilise une authentification basée sur des jetons.

7. Dispositif de communication selon l'une quelconque des revendications précédentes, dans lequel la communication entre le dispositif de périphérie virtuel (11) et le module hôte local (12) s'effectue par l'intermédiaire d'une interface de programmation d'application d'hôte.

8. Dispositif de communication selon l'une quelconque des revendications précédentes, dans lequel la communication au niveau du dispositif de périphérie virtuel (11) utilise un protocole sans état.

9. Procédé de communication mis en oeuvre dans un système de communication au sein d'un réseau, le système de communication comprenant un dispositif de communication (1), un serveur distant (2), un module hôte local (12) et une pluralité de dispositifs clients (3), le dispositif de communication comprenant un dispositif de périphérie virtuel (11), le procédé comprenant, au niveau du dispositif de périphérie virtuel (11) :
l'obtention, en provenance du serveur distant (2), d'un message comprenant une pluralité de commandes,
le démultiplexage du message en une pluralité de commandes démultiplexées, et
l'ordre donné au module hôte local (12) d'envoyer chaque commande démultiplexée à un dispositif client correspondant (3)
**caractérisé en ce que**
le message comprend en outre des instructions supplémentaires permettant à un dispositif client donné (3) d'appliquer une commande donnée de la pluralité de commandes,
le procédé comprenant, au niveau du dispositif de périphérie virtuel (11), le regroupement des instructions supplémentaires avec la commande démultiplexée correspondante et l'ordre donné au module hôte local (12) de transmettre le groupe résultant au dispositif client donné (3).

10. Programme informatique comprenant des instructions qui, lorsque le programme est exécuté par un processeur, amènent le processeur à mettre en oeuvre le procédé selon la revendication 9.

11. Support lisible par ordinateur comprenant des instructions qui, lorsqu'elles sont exécutées par un processeur, amènent le processeur à mettre en oeuvre le procédé selon la revendication 9.
